# EUROPÄISCHE PATENTSCHRIFT

(11) **EP 4 286 034 B1**
(45) Veröffentlichungstag und Bekanntmachung des Hinweises auf die Patenterteilung: **08.04.2026**
(21) Anmeldenummer: 22212253.3
(22) Anmeldetag: 08.12.2022
(51) Int. Cl.: B01D 53/68, B01D 53/02, B01D 53/70, B01J 20/20, B01J 20/26, B01J 20/28, B01J 20/30, B01J 20/34

(54) **VERWENDUNG VON THERMISCH CO2- UND/ODER H2O-BEHANDELTEN RUSSTEILCHEN ZUR ABSCHEIDUNG VON POLYHALOGENIERTEN VERBINDUNGEN**
USE OF THERMALLY CO2- AND/OR H2O-TREATED CARBON BLACK PARTICLES FOR THE SEPARATION OF POLYHALOGENATED COMPOUNDS
UTILISATION DE PARTICULES DE SUIE TRAITÉES THERMIQUEMENT PAR CO2 ET/OU H2O POUR LA SÉPARATION DE COMPOSÉS POLYHALOGÉNÉS

(30) Priorität: 01.06.2022 DE 102022113834
(43) Veröffentlichungstag der Anmeldung: 06.12.2023
(73) Patentinhaber: Götaverken Miljö AB, 417 55 Göteborg (SE); Karlsruher Institut für Technologie, 76131 Karlsruhe (DE)
(72) Erfinder: Hunsinger, Hans, 76356 Weingarten (DE); Andersson, Sven, 422 43 Hisings Backa (SE)
(74) Vertreter: Müller-Boré & Partner Patentanwälte PartG mbB

(56) Entgegenhaltungen:
- WO-A1-2021/089625
- CN-A- 107 042 097
- US-A1- 2004 144 252
- ANDERSSON S ET AL: "Innovative material technology removes dioxins from flue gases", FILTRATION AND SEPARATION, ELSEVIER ADVANCED TECHNOLOGY, OXFORD, GB, vol. 40, no. 10, 1 December 2003 (2003-12-01), pages 22 - 25, XP004481924, ISSN: 0015-1882, DOI: 10.1016/S0015-1882(03)00032-6

## Beschreibung

Die vorliegende Erfindung betrifft die Verwendung von thermisch CO₂- und/oder H₂O-behandelten Rußteilchen eingebunden in einer Matrix zur Abscheidung von polyhalogenierten Verbindungen.

Polyhalogenierte Verbindungen sind beispielsweise polychlorierte Dioxine und Furane, welche sich z.B. in Verbrennungsprozessen bilden und mit dem Abgas abgeleitet werden. Es existieren 75 polychlorierte Dibenzo-para-Dioxine (PCDD) und 135 polychlorierte Dibenzo-Furane (PCDF) (auch PCDD/PCDF). Diese liegen meistens als Gemische von Einzelverbindungen (Kongeneren) mit unterschiedlicher Zusammensetzung vor.

Aufgrund ihrer Toxizität existiert ein Grenzwert für die Emission dieser Verbindungen. Für die Verbrennung als auch Mitverbrennung von Abfällen gelten beispielsweise Emissionsgrenzwerte von 0,1 ng I-TEQ/Nm³ für das Abgas (I-TEQ = Internationale Toxizitätsäquivalente), aber wurde inzwischen durch das EU Waste Incineration BREF (BAT Reference Document) auf 0,01-0,04 ng I-TEQ/Nm³ für Neuanlagen verschärft. Für bestehende Anlagen wird 0,01-0,06 ng I-TEQ/Nm³ vorgesehen.

Die Konzentration der PCDD/PCDF und Quecksilber im entsprechenden Verbrennungsabgas kann beispielsweise mit einem der Verbrennung nachgeschalteten Gewebefilter mit Aktivkohledosierung unter den vorgeschriebenen Grenzwert gesenkt werden.

Der Einsatz von Aktivkohle zur Abscheidung von chlororganischen Verbindungen und Quecksilber aus einem Rauchgas ist auch in Nasswäschern möglich (Thomas Löser: Einsatz von Aktivkohlen zur PCDD/F-Minderung, Abfallwirtschaftsjournal 4 (1992), Nr. 11, 893-902). Dies bedeutet jedoch, dass die entsprechend beladenen Aktivkohleteilchen in der Suspension schlussendlich mit PCDD/F und Quecksilber kontaminiert sind und entsprechend aufwendig entsorgt werden müssen. Zudem ist der Einsatz von Aktivkohle in einem Nasswaschsystem zusätzlich durch feindispersen Abrieb der Aktivkohle gekennzeichnet und führt demnach zu erhöhten Verunreinigungen im Waschwasser, was wiederum den Einsatz von zusätzlichen Filtern erfordert. Außerdem werden alle Oberflächen von Apparatenteilen, die mit der Waschsuspension in Berührung kommen, mit schadstoffbeladenen Kohlepartikeln kontaminiert.

DE 44 25 658 C1 offenbart zudem ein Verfahren zur Abscheidung von polyhalogenierten Verbindungen, bei dem ein Abgas durch ein Festbett aus einem Polyolefin, beispielsweise Polypropylen (PP), geleitet wird. In diesem Zusammenhang wird dargelegt, dass sich PP besonders gut als Absorptionsmaterial für PCDD/PCDF eignet, während Quecksilber von Polyolefinen nicht ab- oder adsorbiert wird. Weiterhin sind die mit PCDD/PCDF beladenen PP-Formteile durch Temperaturerhöhung und die damit erzielte Desorption von PCDD/F regenerierbar.

Das PCDD/PCDF aus dem Verbrennungsgas wird also im reinen PP nicht irreversibel fixiert, sondern es handelt sich lediglich um ein stark von der Temperatur und der PCDD/PCDF-Konzentration abhängiges Absorptions-/Desorptionsgleichgewicht.

Speziell in Müllverbrennungsanlagen mit Nasswaschsystemen, in denen üblicherweise PP als Werkstoff eingesetzt wird, variiert der PCDD/PCDF-Gehalt im Verbrennungsgas je nach Betriebszustand und im ungünstigsten Fall wird ein Teil des in geringen Konzentrationen in das Nasswaschsystem eingebrachten PCDD/PCDF im PP absorbiert und mit der Zeit stark angereichert. Vorzugsweise im Nicht-Regelbetrieb (An- und Abfahrzeiten, Störfälle) ist mit deutlich erhöhten PCDD/PCDF-Konzentrationen im Verbrennungsgas zu rechnen. Dies führt wiederum zu einer starken PCDD/PCDF-Kontamination der PP-Komponenten und bedeutet, dass nach einer längeren Betriebszeit der Nasswaschsysteme die PCDD/PCDF so stark im PP angereichert sind, dass bei Normalbetrieb und/oder geringe Änderungen des Betriebszustandes, beispielsweise Temperaturerhöhungen oder Konzentrationsabsenkungen im Rauchgas, zu einer PCDD/PCDF-Desorption führen. Daher muss in solchen Anlagen entweder ein zusätzliches Aggregat zur PCDD/PCDF-Abscheidung am Ende der Rauchgasreinigungsstrecke nachgerüstet werden ("Polizeifilter") oder die Freisetzung der PCDD/PCDF aus den PP Konstruktionswerkstoffen des Nasswaschsystems verhindert werden.

Um dem Problem der Desorption von PCDD/PCDF aus PP entgegenzuwirken, wurden in die entsprechende Polyolefin-Matrix bereits feindisperse Feststoffteilchen eingelagert, welche PCDD/PCDF irreversibel adsorbieren können (vgl. DE 101 64 066 B4 oder WO 2021/089625 A1).

Da Quecksilber von Polyolefinen nicht absorbiert wird, kann diese mit Adsorbentpartikeln dotierte Polyolefin-Matrix nach Verwendung verbrannt werden, was zu einer quantitativen Zerstörung von den PCDD/PCDFs führt, ohne dass große Mengen von Quecksilber freigesetzt werden. Als Feststoffteilchen eignen sich insbesondere Kohlenstoffteilchen, vorzugsweise fein gemahlene Aktivkohle, wie beispielsweise Herdofenkoks, und/oder Rußteilchen. Diese Adsorbenzien sorgen mit steigendem Masseanteil und bei homogener Verteilung in der Polyolefin-Matrix (a) für eine bessere Abscheidung von PCDD/PCDF, (b) aber leider auch für eine Minderung der Festigkeitskennwerte besonders deutlich bei der Zugabe von Rußpartikeln (e.g. Zugfestigkeit) des entsprechend dotierten Polyolefin-Formkörpers. Die Zugabe von feindispersen Aktivkohlepartikeln vermindert im Gegensatz zu Rußpartikeln die Festigkeit nur geringfügig. Nachteilig für Aktivkohlepartikel ist aber die im Vergleich zu Rußpartikeln grobdispersere Partikelgrößenverteilung, wodurch eine homogene Vermischung im PP sehr erschwert wird. Grobe Partikel weisen eine deutlich höhere Neigung zu Entmischungen durch Sedimentation in der Schmelze der Matrix auf.

Entsprechend liegt der vorliegenden Erfindung die Aufgabe zugrunde, eine Verwendung von feindispersen Kohlenstoffteilchen (Russpartikel), die in hoher Konzentration homogen in einer Thermoplast-Matrix eingebunden werden, zur Abscheidung von polyhalogenierten Verbindungen bereitzustellen, wobei die Abscheidung von den polyhalogenierten Verbindungen maximiert wird und gleichzeitig die Festigkeitskennwerte der ursprünglichen Thermoplast-Matrix beibehalten bzw. lediglich marginal verschlechtert werden.

Die vorstehend beschriebene Aufgabe wird durch die in den Ansprüchen gekennzeichneten Ausführungsformen der vorliegenden Erfindung gelöst.

Insbesondere wird erfindungsgemäß eine Verwendung von thermisch CO₂- und/oder H₂O-behandelten Rußteilchen eingebunden in einer Matrix zur Abscheidung von polyhalogenierten Verbindungen bereitgestellt, wobei die Matrix mindestens einen Thermoplast enthält, und wobei, in Bezug auf 100 Massen-% Matrix, 0,01 Massen-% oder mehr und 30,00 Massen-% oder weniger von den thermisch CO₂- und/oder H₂O-behandelten Rußteilchen in der Matrix eingebunden sind, wobei die thermisch CO₂-und/oder H₂O-behandelten Rußteilchen bei 500 °C oder mehr und 1500 °C oder weniger behandelt worden sind.

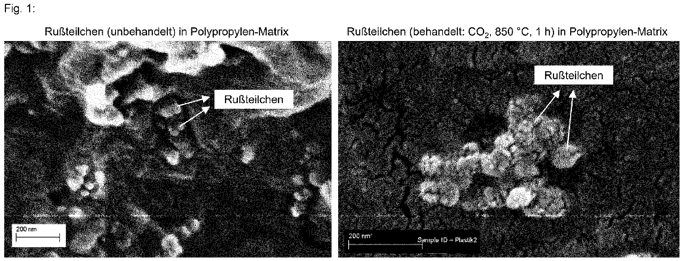

Durch die thermische CO₂- und/oder H₂O-Behandlung der Rußteilchen weist deren Oberfläche eine verbesserte Benetzung mit Thermoplast-Schmelzen bei entsprechender thermischer Extrusion auf, sodass ein inniger Kontakt und bei anschließender Abkühlung eine formschlüssige Verbindung zwischen den thermisch CO₂- und/oder H₂O-behandelten Rußteilchen und der Thermoplast-Matrix entsteht. Figur 1 zeigt hierzu beispielhaft erfindungsgemäß verwendete thermisch CO₂-und/oder H₂O-behandelte Rußteilchen eingebunden in einer Polypropylen-Matrix (links) und thermisch CO₂- und/oder H₂O-unbehandelte Rußteilchen eingebunden in einer Polypropylen-Matrix (rechts), um den erfindungsgemäß vorteilhaften innigen Kontakt der thermisch CO₂- und/oder H₂O-behandelten Rußteilchen mit der Thermoplast-Matrix zu verdeutlichen. Folglich führt diese erfindungsgemäße Verwendung vorteilhafterweise dazu, dass der Phasenübergang der polyhalogenierten Verbindungen von der Thermoplast-Matrix zu den Rußteilchen verbessert als auch die Festigkeitskennwerte der ursprünglichen Thermoplast-Matrix beibehalten bzw. lediglich marginal verschlechtert werden.

Erfindungsgemäß werden thermisch CO₂- und/oder H₂O-behandelte Rußteilchen eingebunden in einer Matrix zur Abscheidung von polyhalogenierten Verbindungen verwendet.

Ruß ist ein schwarzer, pulverförmiger Feststoff, der je nach Qualität und Verwendung zu 80,0 bis 99,5 % aus Kohlenstoff besteht, der durch unvollständige Verbrennung (Verbrennungsruß) oder durch thermische Zersetzung bzw. Pyrolyse (Spaltruß) hergestellt wird und der hauptsächlich als Füllstoff in der Gummiindustrie verwendet wird.

Die thermisch CO₂- und/oder H₂O-behandelten Rußteilchen sind erfindungsgemäß nicht weiter beschränkt, sofern diese thermisch mit CO₂- und/oder H₂O behandelt worden sind.

In einer bevorzugten Ausführungsform wird der Ruß bei 500 °C oder mehr und 1000 °C oder weniger mit CO₂- und/oder H₂O behandelt, bevorzugter 550 °C oder mehr und 950 °C oder weniger, mehr bevorzugt 600 °C oder mehr und 900 °C oder weniger und besonders bevorzugt 650 °C oder mehr und 850 °C oder weniger. Der Ruß kann beispielsweise bei 500 bis 950 °C, 500 bis 900 °C, 500 bis 850 °C, 550 bis 1000 °C, 550 bis 900 °C, 550 bis 850 °C, 600 bis 1000 °C, 600 bis 950 °C, 600 bis 850 °C, 650 bis 1000 °C, 650 bis 950 °C oder 650 bis 900 °C mit CO₂- und/oder H₂O behandelt werden. Bei niedrigen Temperaturen ist in diesem Zusammenhang eine lange Behandlungszeit erforderlich. Bei hohen Temperaturen hingegen ist die Kinetik der Reaktionen sehr schnell, was aber eine aufwendige Reaktionskontrolle erfordert.

Die Zeit der thermischen CO₂- und/oder H₂O-Behandlung des Rußes ist erfindungsgemäß nicht weiter beschränkt, sofern der Ruß thermisch mit CO₂- und/oder H₂O behandelt wird. Bevorzugt wird der Ruß für 0,1 Stunden oder mehr mit CO₂und/oder H₂O thermisch behandelt, bevorzugter 0,3 Stunden oder mehr, mehr bevorzugt 0,5 Stunden oder mehr und besonders bevorzugt 0,7 Stunden oder mehr. Als oberen Grenzwert wird der Ruß bevorzugt für 10,0 Stunden oder weniger mit CO₂und/oder H₂O thermisch behandelt, bevorzugter 7,0 Stunden oder weniger, mehr bevorzugt 4,0 Stunden oder weniger und besonders bevorzugt 2,0 Stunden oder weniger. Der Ruß kann beispielsweise für 0,1 bis 10,0 Stunden, 0,1 bis 7,0 Stunden, 0,1 bis 4,0 Stunden, 0,1 bis 2,0 Stunden, 0,3 bis 10,0 Stunden, 0,3 bis 7,0 Stunden, 0,3 bis 4,0 Stunden, 0,3 bis 2,0 Stunden, 0,5 bis 10,0 Stunden, 0,5 bis 7,0 Stunden, 0,5 bis 4,0 Stunden, 0,5 bis 2,0 Stunden, 0,7 bis 10,0 Stunden, 0,7 bis 7,0 Stunden, 0,7 bis 4,0 Stunden oder 0,7 bis 2,0 Stunden mit CO₂- und/oder H₂O behandelt werden. Besonders bevorzugt wird der Ruß für 0,7 Stunden oder mehr und 2,0 Stunden oder weniger mit CO₂- und/oder H₂O thermisch behandelt.

Der Druck der thermischen CO₂- und/oder H₂O-Behandlung des Rußes ist erfindungsgemäß nicht weiter beschränkt. Bevorzugt wird der Ruß bei 0,1 bar oder mehr mit CO₂- und/oder H₂O thermisch behandelt, bevorzugter 0,4 bar oder mehr, mehr bevorzugt 0,7 bar oder mehr und besonders bevorzugt 1,0 bar oder mehr. Als oberen Grenzwert wird der Ruß bevorzugt bei 10,0 bar oder weniger mit CO₂- und/oder H₂O thermisch behandelt, bevorzugter 7,0 bar oder weniger, mehr bevorzugt 4,0 bar oder weniger und besonders bevorzugt 2,0 bar oder weniger. Der Ruß kann beispielsweise bei 0,1 bis 10,0 bar, 0,1 bis 7,0 bar, 0,1 bis 4,0 bar, 0,1 bis 2,0 bar, 0,4 bis 10,0 bar, 0,4 bis 7,0 bar, 0,4 bis 4,0 bar, 0,4 bis 2,0 bar, 0,7 bis 10,0 bar, 0,7 bis 7,0 bar, 0,7 bis 4,0 bar, 0,7 bis 2,0 bar, 1,0 bis 10,0 bar, 1,0 bis 7,0 bar, 1,0 bis 4,0 bar oder 1,0 bis 2,0 bar mit CO₂- und/oder H₂O behandelt werden.

Die thermische Behandlung des Rußes mit CO₂- und/oder H₂O ist erfindungsgemäß nicht weiter beschränkt, sofern der Ruß mit CO₂- und/oder H₂O thermisch behandelt wird. Während der thermischen Behandlung des Rußes mit CO₂- und/oder H₂O wird die Schale der Rußteilchen partiell oxidiert und es laufen, je nach verwendeter Substanz (CO₂- und/oder H₂O), folgende Reaktionen ab: (a) CO₂ + C → 2CO und/oder (b) H₂O + C → CO + H₂. Dabei wird H₂O vorzugsweise als Wasserdampf eingesetzt.

Das zur thermischen Behandlung des Rußes mit CO₂- und/oder H₂O eingesetzte Gas kann, neben H₂O in Form von Wasserdampf und/oder CO₂, weiterhin die Reaktionsprodukte CO und/oder H₂ sowie mindestens ein Inertgas enthalten, ausgewählt aus der Gruppe, bestehend aus Stickstoff, Helium, Neon, Argon, Krypton, Xenon und Radon.

Die thermische Behandlung des Rußes mit CO₂- und/oder H₂O kann in einer Vielzahl von Reaktoren durchgeführt werden, sofern diese für die thermische Behandlung von Ruß mit CO₂- und/oder H₂O geeignet sind, wie beispielsweise Schachtöfen, Etagenöfen, Drehrohröfen oder Flugstromreaktoren mit Abscheider.

Die resultierenden thermisch CO₂- und/oder H₂O-behandelten Rußteilchen weisen vorzugsweise einen festen Kern und eine (äußere) Schale auf. Der feste Kern besteht dabei im Wesentlichen aus thermisch CO₂- und/oder H₂O-unbehandeltem Ruß und die Schale besteht dabei im Wesentlichen aus thermisch CO₂- und/oder H₂O-behandeltem Ruß, d.h. die äußere Schale ist (nur) strukturiert, wohingegen eine unbehandelte Rußoberfläche glatt ist. Dabei bedeutet "im Wesentlichen" mindestens 80 Vol.-%, bevorzugt mindestens 90 Vol.-% und bevorzugter mindestens 95 Vol.-%. Besonders bevorzugt liegt in dem festen Kern ausschließlich thermisch CO₂- und/oder H₂O-unbehandelter Ruß und in der Schale ausschließlich thermisch CO₂- und/oder H₂O-behandelter Ruß vor.

In einer bevorzugten Ausführungsform weisen die thermisch CO₂- und/oder H₂O-behandelten Rußteilchen einen maximalen Teilchendurchmesser von 200 nm oder weniger auf, bevorzugter 150 nm oder weniger, mehr bevorzugt 100 nm oder weniger und besonders bevorzugt 50 nm oder weniger.

Der vorstehend definierte maximale Teilchendurchmesser der erfindungsgemäß verwendeten thermisch CO₂- und/oder H₂O-behandelten Rußteilchen kann beispielsweise mittels Rasterelektronenmikroskopie (REM) bestimmt werden.

Die Form bzw. Geometrie dieser thermisch CO₂- und/oder H₂O-behandelten Rußteilchen ist erfindungsgemäß nicht weiter beschränkt. So können diese beispielsweise kugelförmige Teilchen oder ellipsoide Teilchen darstellen. Die thermisch CO₂- und/oder H₂O-behandelten Rußteilchen können sich auch partiell oder ausschließlich zu Agglomeraten zusammenlagern und als solche in der Thermoplast-Matrix eingebettet vorliegen.

Die erfindungsgemäß eingesetzten thermisch CO₂- und/oder H₂O-behandelten Rußteilchen weisen bevorzugt eine massebezogene spezifische Oberfläche von 250 m²/g oder mehr auf, bevorzugter 270 m²/g oder mehr, mehr bevorzugt 290 m²/g oder mehr und besonders bevorzugt 310 m²/g oder mehr. Die Obergrenze der massebezogenen spezifischen Oberfläche der thermisch CO₂- und/oder H₂O-behandelten Rußteilchen ist erfindungsgemäß nicht weiter beschränkt.

Die massebezogene spezifische Oberfläche der erfindungsgemäß eingesetzten thermisch CO₂- und/oder H₂O-behandelten Rußteilchen kann beispielsweise durch Brunauer-Emmett-Teller (BET)-Messung unter Verwendung eines Quantachrome NovaWin (mit N₂) bestimmt werden.

Die Matrix ist erfindungsgemäß nicht weiter beschränkt, sofern diese mindestens einen Thermoplast umfasst. Der Thermoplast ist bevorzugt mindestens einer, ausgewählt aus der Gruppe, bestehend aus Polyolefin, Poly(meth)acrylat, Polyether, Polyester, Polyethylenglykol, Polyketon, Polyurethan, Polyamid, Polyamin, Polyharnstoff, Polysiloxan, Polytetrafluoroethylen, Polyphenylenether, Polyphenylenoxid, Polyphenylensulfid, Polystyrol, Polyvinylidendifluorid, Polyvinylchlorid, Mischungen derer, Derivate derer und Copolymere derer. Der Thermoplast ist mehr bevorzugt ein Polyolefin und besonders bevorzugt mindestens einer, ausgewählt aus der Gruppe, bestehend aus Polyethylen (PE), Polypropylen (PP), Polybutylen (PB), Polyisobutylen (PIB) und Polymethylpenten (PMP).

Zudem kann die Matrix weitere Komponenten wie beispielsweise Farbstoffe, Restlösungsmittel und/oder Weichmacher enthalten. Neben den erfindungsgemäß verwendeten thermisch CO₂- und/oder H₂O-behandelten Rußteilchen können auch weitere Füllstoffe in der Matrix eingebettet sein, sofern diese die Festigkeitskennwerte der Matrix dabei nicht oder lediglich marginal verschlechtern. Beispielsweise können neben den erfindungsgemäß verwendeten thermisch CO₂- und/oder H₂O-behandelten Rußteilchen auch teilweise Aktivkohleteilchen, Herdofenkoksteilchen und/oder thermisch CO₂- und/oder H₂O-unbehandelte Rußteilchen in der Matrix eingebunden sein.

Erfindungsgemäß sind, in Bezug auf 100 Massen-% Matrix, 0,01 Massen-% oder mehr und 30,00 Massen-% oder weniger von den thermisch CO₂- und/oder H₂O-behandelten Rußteilchen in der Matrix eingebunden. In Bezug auf 100 Massen-% Matrix sind bevorzugt 1,00 Massen-% oder mehr und 27,00 Massen-% oder weniger der thermisch CO₂- und/oder H₂O-behandelten Rußteilchen in der Matrix eingebunden, bevorzugter 5,00 Massen-% oder mehr und 24,00 Massen-% oder weniger, mehr bevorzugt 10,00 Massen-% oder mehr und 22,00 Massen-% oder weniger und besonders bevorzugt 15,00 Massen-% oder mehr und 20,00 Massen-% oder weniger.

Beispielsweise können, in Bezug auf 100 Massen-% Matrix, 0,01 bis 27,00 Massen-%, 0,01 bis 24,00 Massen-%, 0,01 bis 22,00 Massen-%, 0,01 bis 20,00 Massen-%, 1,00 bis 30,00 Massen-%, 1,00 bis 24,00 Massen-%, 1,00 bis 22,00 Massen-%, 1,00 bis 20,00 Massen-%, 5,00 bis 30,00 Massen-%, 5,00 bis 27,00 Massen-%, 5,00 bis 22,00 Massen-%, 5,00 bis 20,00 Massen-%, 10,00 bis 30,00 Massen-%, 10,00 bis 27,00 Massen-%, 10,00 bis 24,00 Massen-%, 10,00 bis 20,00 Massen-%, 15,00 bis 30,00 Massen-%, 15,00 bis 27,00 Massen-%, 15,00 bis 24,00 Massen-% oder 15,00 bis 22,00 Massen-% von den thermisch CO₂- und/oder H₂O-behandelten Rußteilchen in der Matrix eingebunden sein.

Wenn in Bezug auf 100 Massen-% Matrix mehr als 30,00 Massen-% thermisch CO₂und/oder H₂O-behandelte Rußteilchen in der Matrix eingebunden sind, werden die Festigkeitskennwerte der Matrix zunehmend verschlechtert.

Sofern in der Matrix neben den erfindungsgemäß verwendeten thermisch CO₂und/oder H₂O-behandelten Rußteilchen auch weitere Füllstoffe in der Matrix eingebettet vorliegen, so beträgt die Gesamtmasse der thermisch CO₂- und/oder H₂O-behandelten Rußteilchen und der weiteren Füllstoffe, welche in der Matrix eingebunden sind, 30,00 Massen-% oder weniger in Bezug auf 100 Massen-% Matrix.

Erfindungsgemäß sind die thermisch CO₂- und/oder H₂O-behandelten Rußteilchen in der vorstehend definierten Matrix eingebunden. In diesem Zusammenhang bedeutet "eingebunden", dass die thermisch CO₂- und/oder H₂O-behandelten Rußteilchen und die Matrix miteinander vermischt sind.

In einer bevorzugten Ausführungsform der erfindungsgemäßen Verwendung sind die thermisch CO₂- und/oder H₂O-behandelten Rußteilchen in der Matrix homogen verteilt und/oder vollständig eingeschlossen. In diesem Zusammenhang bedeutet vollständig eingeschlossen, dass jedes der thermisch CO₂- und/oder H₂O-behandelten Rußteilchen vollständig von der Matrix umhüllt ist, sodass idealerweise keine thermisch CO₂- und/oder H₂O-behandelten Rußteilchen auf allen Oberflächen der Matrix vorliegen.

Da die zur Abscheidung angestrebten polyhalogenierten Verbindungen gut in Thermoplasten diffundieren und sich im Volumen gleichmäßig einlagern, d.h. absorbieren, sind auch die erfindungsgemäß verwendeten thermisch CO₂- und/oder H₂O-behandelten Rußteilchen für eine irreversible Abscheidung von polyhalogenierten Verbindungen zugänglich.

Bevorzugt sind die zur Abscheidung angestrebten polyhalogenierten Verbindungen polyhalogenierte Dibenzo-para-Dioxine, polyhalogenierte Dibenzo-Furane und/oder dioxinähnliche polyhalogenierte Biphenyle. Besonders bevorzugt sind die zur Abscheidung angestrebten polyhalogenierten Verbindungen mindestens eine, ausgewählt aus der Gruppe, bestehend aus polychlorierten Dibenzo-para-Dioxinen (PCDD), polychlorierten Dibenzo-Furanen (PCDF), dioxinähnlichen polychlorierten Biphenylen (dIPCB), polybromierten Dibenzo-para-Dioxinen (PBDD), polybromierten Dibenzo-Furanen (PBDF), dioxinähnlichen polybromierten Biphenylen (dIPBB), gemischt chlorierten und bromierten Dibenzo-para-Dioxinen (PXDD), gemischt chlorierten und bromierten Dibenzo-Furanen (PXDF) und dioxinähnlichen gemischt chlorierten und bromierten Biphenylen (dIPXB). Erfindungsgemäß bedeutet "Abscheidung" irreversible Absorption und/oder Adsorption der polyhalogenierten Verbindungen an einer Oberfläche der erfindungsgemäß verwendeten thermisch CO₂und/oder H₂O-behandelten Rußteilchen, welche in der Matrix eingebunden sind.

In einer bevorzugten Ausführungsform wird die vorstehend definierte erfindungsgemäße Matrix mit den eingebundenen thermisch CO₂- und/oder H₂O-behandelten Rußteilchen in einem Abgasreinigungssystem verwendet. Das Abgasreinigungssystem ist bevorzugt (i) ein Nasswaschsystem oder (ii) ein System, in dem das zu reinigende Gas mit oder ohne Wasser-Kondensation und mit oder ohne Zusatz einer Flüssigkeit trocken oder nass von einem Gas durchströmbar ist.

Aus der Matrix mit den eingebundenen thermisch CO₂- und/oder H₂O-behandelten Rußteilchen ist eine Vielzahl an Komponenten eines Abgasreinigungssystems herstellbar. Als klassisches Einsatzgebiet für die erfindungsgemäße Matrix mit den eingebundenen thermisch CO₂- und/oder H₂O-behandelten Rußteilchen bieten sich die üblichen Füllkörper einer Schüttung im Festbett an. In einer bevorzugten Ausführungsform der vorliegenden Erfindung weist die Matrix mit den eingebundenen thermisch CO₂- und/oder H₂O-behandelten Rußteilchen demnach die Form eines Füllkörpers, eines Demisterformkörpers und/oder einer Fasergestrickpackung auf.

In diesem Zusammenhang kann die Form eines Füllkörpers beispielsweise mindestens eine, ausgewählt aus der Gruppe, bestehend aus Berl-Sattel-Form, Intalox-Sattel-Form, Novalox-Sattelform, BIO-NET-Form, Hacketten-Form, Hel-X-Form, Hiflow-Ring-Form, NOR-PAC-Form, Pall-Ring-Form, Raschig-Ring-Form, Sattel-Form, Top-Pak-Form, VFF-NetBall-Form, VFF-Igel-Form, Telpac-Form, Telerette-Form, Snowflake-Form, Cascade-Mini-Ring-Form, Q-pack-Form, BIOdek-Form, MASSdek-Form, Mellapak-Form, VSP-Form und strukturierte Packung, sein.

Die Matrix mit den eingebundenen thermisch CO₂- und/oder H₂O-behandelten Rußteilchen kann jedoch auch die Form anderer Körper aufweisen, wie beispielsweise Gewebematten, Fasern, Späne, Streifen, Granulate und/oder durch Spritzguss hergestellte Formteile.

Aber auch andere Komponenten, wie beispielsweise Tropfenabscheider, Rohrauskleidungen, durchströmbare Umfassungen, Behälter für die Füllkörper, Zwischenböden oder andere konstruktive Bauteile eines Abgasreinigungssystems, welche in einem direkten Kontakt zum Abgas oder zum Waschwasser stehen, bieten ein Einsatzgebiet für die vorstehend definierte erfindungsgemäße Matrix mit den eingebundenen thermisch CO₂- und/oder H₂O-behandelten Rußteilchen. Dabei bietet es sich in vorteilhafter Weise an, diejenigen Komponenten des Abgasreinigungssystems, welche bereits aus Thermoplasten hergestellt sind, ohne grundlegende konstruktive Änderungen durch solche der vorstehend definierten erfindungsgemäßen Matrix mit den eingebundenen thermisch CO₂- und/oder H₂O-behandelten Rußteilchen zu ersetzen.

Die vorstehend definierten Füllkörper, Demisterformkörper, Fasergestrickpackungen und andere Körper und Komponenten des Abgasreinigungssystems können beispielsweise durch ein Spritzgussverfahren hergestellt werden, welches folgende Schritte umfasst:
(a) Einbinden von thermisch CO₂- und/oder H₂O-behandelten Rußteilchen in eine Matrix, welche mindestens einen Thermoplast enthält, durch Mischen der thermisch CO₂- und/oder H₂O-behandelten Rußteilchen mit der Matrix unter Verwendung eines beheizten Ein- oder Doppelschneckenextruders, wobei, in Bezug auf 100 Massen-% Matrix, 0,01 Massen-% oder mehr und 30,00 Massen-% oder weniger von den thermisch CO₂- und/oder H₂O-behandelten Rußteilchen in der Matrix eingebunden sind;
(b) Einspritzen der Mischung aus der Matrix mit den eingebundenen thermisch CO₂- und/oder H₂O-behandelten Rußteilchen in einen entsprechenden Hohlraum eines Spritzgießwerkzeugs; und
(c) Abkühlen der Mischung aus der Matrix mit den eingebundenen thermisch CO₂und/oder H₂O-behandelten Rußteilchen in dem Hohlraum des Spritzgießwerkzeugs.

Erfindungsgemäß werden die Festigkeitskennwerte, wie beispielsweise Zugfestigkeit, der vorstehend definierten Matrix durch Einbinden thermisch CO₂- und/oder H₂O-behandelter Rußteilchen nicht oder lediglich marginal verschlechtert.

Wenn die Zugfestigkeit der vorstehend definierten Matrix ohne eingebundene thermisch CO₂- und/oder H₂O-behandelte Rußteilchen als 100 % gesetzt werden, bedeutet "lediglich marginal", dass sich die Zugfestigkeit der vorstehend definierten Matrix durch Einbinden der thermisch CO₂- und/oder H₂O-behandelten Rußteilchen lediglich um 20 % oder weniger verändert, vorzugsweise 17 % oder weniger, bevorzugter 14 % oder weniger, mehr bevorzugt 11 % oder weniger und besonders bevorzugt 8 % oder weniger.

Die Zugfestigkeit ist erfindungsgemäß definiert als die maximale Zugspannung, die der entsprechende Formkörper aushält, bevor er bricht.

Die Figuren zeigen:
Fig. 1 zeigt thermisch CO₂- und/oder H₂O-unbehandelte Rußteilchen eingebunden in einer Polypropylen-Matrix (links) und erfindungsgemäß verwendete thermisch CO₂und/oder H₂O-behandelte Rußteilchen eingebunden in einer Polypropylen-Matrix (rechts).
Fig. 2 zeigt Rasterelektronenmikroskop-Aufnahmen von thermisch CO₂- und/oder H₂O-unbehandelten Rußteilchen (links) und erfindungsgemäß eingesetzten thermisch CO₂- und/oder H₂O-behandelten Rußteilchen (rechts).
Fig. 3 zeigt die Abscheidungsmenge (ng I-TEQ/g) von PCDD/PCDF in einer Polypropylen-Matrix mit eingebundenen thermisch CO₂-behandelten Rußteilchen über einen Zeitraum von bis zu 12 Monaten.

### Beispiele

Im Folgenden wird die Erfindung weiter veranschaulicht.

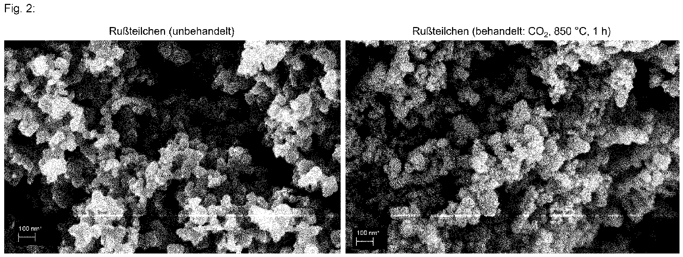

Rußteilchen wurden bei 850 °C mit CO₂ über einen Zeitraum von 1 Stunde thermochemisch behandelt, wobei erfindungsgemäß vorgesehene thermisch CO₂-behandelte Rußteilchen erzeugt wurden. Figur 2 zeigt hierzu Rasterelektronenmikroskop (REM)-Aufnahmen von den unbehandelten Rußteilchen (links) und von den erfindungsgemäß vorgesehenen thermisch CO₂-behandelten Rußteilchen (rechts).

Diese thermisch CO₂-behandelten primären Rußteilchen wiesen eine massebezogene spezifische Oberfläche von 324 m²/g und einen maximalen Teilchendurchmesser von < 100 nm, ca. 50-20 nm, auf, welche, wie vorstehend beschrieben, mittels REM bestimmt worden sind.

Anschließend wurden die dergestalt thermisch CO₂-behandelten Rußteilchen in einem Doppelschneckenextruder mit Polypropylen vermischt und darauffolgend in ein entsprechendes Spritzgießwerkzeug eingespritzt. Nach Abkühlung wurde ein entsprechender Formkörper erhalten.

Die Zugfestigkeit eines Standardprobekörpers Typ 1A laut ISO 527 aus diesem Material wurde laut ISO 527 bestimmt und betrug 23,2 MPa.

Als Vergleichsprobe wies ein äquivalenter Standardprobekörpers aus Polypropylen ohne eingebundene Rußteilchen eine Zugfestigkeit von 25 MPa auf.

Folglich wurde die Zugfestigkeit des Polypropylens durch das Einbinden von thermisch CO₂-behandelten Rußteilchen (hier 16 Massen-% in Bezug auf 100 Massen-% Polypropylen) um lediglich 7% reduziert.

Das entsprechende Vergleichsbeispiel wurde analog zum erfindungsgemäßen Beispiel hergestellt, mit der Ausnahme, dass, anstatt von erfindungsgemäß eingesetzten thermisch CO₂-behandelten Rußteilchen, thermisch CO₂-unbehandelte Rußteilchen in die Matrix eingebunden wurden.

Die Rußteilchen wiesen dabei eine massebezogene spezifische Oberfläche von 240 m²/g und einen maximalen Teilchendurchmesser von ca. 50-20 nm auf.

Die Zugfestigkeit des erhaltenen Formkörpers vom Vergleichsbeispiel betrug lediglich 16 MPa. Folglich wurde die Zugfestigkeit des Polypropylens durch das Einbinden von 16 Massen-% thermisch CO₂-unbehandelten Rußteilchen in Bezug auf 100 Massen-% Polypropylen um exzessive 36% reduziert.

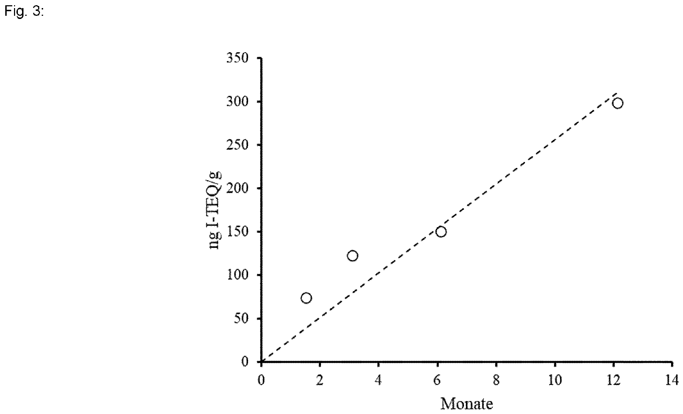

In Figur 3 ist die Abscheidungsmenge (ng I-TEQ/g) von PCDD/PCDF in einer Polypropylen-Matrix mit eingebundenen thermisch CO₂-behandelten Rußteilchen (erfindungsgemäßes Beispiel) über einen Zeitraum von bis zu 12 Monaten dargestellt.

## Patentansprüche

1. Verwendung von thermisch CO₂- und/oder H₂O-behandelten Rußteilchen eingebunden in einer Matrix zur Abscheidung von polyhalogenierten Verbindungen,
wobei die Matrix mindestens einen Thermoplast enthält, und
wobei, in Bezug auf 100 Massen-% Matrix, 0,01 Massen-% oder mehr und 30,00 Massen-% oder weniger von den thermisch CO₂- und/oder H₂O-behandelten Rußteilchen in der Matrix eingebunden sind, wobei die thermisch CO₂- und/oder H₂O-behandelten Rußteilchen bei 500 °C oder mehr und 1500 °C oder weniger behandelt worden sind.

2. Verwendung nach Anspruch 1, wobei die thermisch CO₂- und/oder H₂O-behandelten Rußteilchen eine massebezogene spezifische Oberfläche von 250 m²/g oder mehr aufweisen.

3. Verwendung nach Anspruch 1 oder 2, wobei die thermisch CO₂- und/oder H₂O-behandelten Rußteilchen einen maximalen Teilchendurchmesser von 200 nm oder weniger aufweisen.

4. Verwendung nach einem der Ansprüche 1 bis 3, wobei der Thermoplast mindestens eines, ausgewählt aus der Gruppe, bestehend aus Polyolefin, Poly(meth)acrylat, Polyether, Polyester, Polyethylenglykol, Polyketon, Polyurethan, Polyamid, Polyamin, Polyharnstoff, Polysiloxan, Polytetrafluoroethylen, Polyphenylenether, Polyphenylenoxid, Polyphenylensulfid, Polystyrol, Polyvinylidendifluorid, Polyvinylchlorid, Mischungen derer, Derivate derer und Copolymere derer, ist.

5. Verwendung nach einem der Ansprüche 1 bis 4, wobei die thermisch CO₂-und/oder H₂O-behandelten Rußteilchen in der Matrix homogen verteilt und/oder vollständig eingeschlossen sind.

6. Verwendung nach einem der Ansprüche 1 bis 5, wobei die polyhalogenierten Verbindungen polyhalogenierte Dibenzo-para-Dioxine, polyhalogenierte Dibenzo-Furane und/oder polyhalogenierte Biphenyle sind.

7. Verwendung nach einem der Ansprüche 1 bis 6, wobei die Matrix mit den eingebundenen thermisch CO₂- und/oder H₂O-behandelten Rußteilchen die Form eines Füllkörpers, eines Demisterformkörpers und/oder einer Fasergestrickpackung aufweist.

8. Verwendung nach einem der Ansprüche 1 bis 7 in einem Abgasreinigungssystem.

9. Verwendung nach Anspruch 8, wobei das Abgasreinigungssystem (i) ein Nasswaschsystem ist oder (ii) ein System ist, in dem das zu reinigende Gas mit oder ohne Kondensation und mit oder ohne Zusatz einer Flüssigkeit trocken oder nass von einem Gas durchströmbar ist.

## Claims

1. Use of thermally CO₂- and/or H₂O-treated soot particles, integrated in a matrix, for separating polyhalogenated compounds,
wherein the matrix contains at least one thermoplastic, and
wherein, based on 100 mass% matrix, 0.01 mass% or more and 30.00 mass% or less of the thermally CO₂- and/or H₂O-treated soot particles are integrated in the matrix, wherein the thermally CO₂- and/or H₂O-treated soot particles have been treated at 500°C or more and 1500°C or less.

2. Use according to claim 1, wherein the thermally CO₂- and/or H₂O-treated soot particles have a mass-related specific surface area of 250 m²/g or more.

3. Use according to claim 1 or 2, wherein the thermally CO₂- and/or H₂O-treated soot particles have a maximum particle diameter of 200 nm or less.

4. Use according to any of claims 1 to 3, wherein the thermoplastic is at least one selected from the group consisting of polyolefin, poly(meth)acrylate, polyether, polyester, polyethylene glycol, polyketone, polyurethane, polyamide, polyamine, polyurea, polysiloxane, polytetrafluoroethylene, polyphenylene ether, polyphenylene oxide, polyphenylene sulfide, polystyrene, polyvinylidene difluoride, polyvinylchloride, mixtures thereof, derivatives thereof, and copolymers thereof.

5. Use according to any of claims 1 to 4, wherein the thermally CO₂- and/or H₂O-treated soot particles are homogeneously distributed and/or completely embedded in the matrix.

6. Use according to any of claims 1 to 5, wherein the polyhalogenated compounds are polyhalogenated dibenzo-para-dioxins, polyhalogenated dibenzo-furans and/or polyhalogenated biphenyls.

7. Use according to any of claims 1 to 6, wherein the matrix comprising the integrated thermally CO₂- and/or H₂O-treated soot particles has the form of a filler, a demister molded body and/or a knitted fiber packing.

8. Use according to any of claims 1 to 7 in a waste gas purification system.

9. Use according to claim 8, wherein the waste gas purification system is (i) a wet scrubber system or (ii) a system in which a gas can flow through the gas to be purified, with or without condensation, and with or without addition of a liquid, in dry or wet form.

## Revendications

1. Utilisation de particules de suie traitées thermiquement par du CO₂ et/ou H₂O, intégrées dans une matrice, pour séparer des composés polyhalogénés,
dans laquelle la matrice contient au moins un composé thermoplastique, et
dans laquelle, basés sur 100 % en masse de matrice, 0,01 % en masse ou plus et 30,00 % en masse ou moins des particules de suie traitées thermiquement par du CO₂ et/ou H₂O sont intégrés dans la matrice, dans laquelle les particules de suie traitées thermiquement par du CO₂ et/ou H₂O ont été traitées à une température de 500 °C ou plus et 1500 °C ou moins.

2. Utilisation selon la revendication 1, dans laquelle les particules de suie traitées thermiquement par du CO₂ et/ou H₂O ont une surface spécifique liée à la masse de 250 m²/g ou plus.

3. Utilisation selon la revendication 1 ou 2, dans laquelle les particules de suie traitées thermiquement par du CO₂ et/ou H₂O ont un diamètre particulaire maximal de 200 nm ou moins.

4. Utilisation selon l'une quelconque des revendications 1 à 3, dans laquelle le composé thermoplastique est au moins un sélectionné parmi le groupe constitué de la polyoléfine, du poly(méth)acrylate, du polyéther, du polyester, du polyéthylène glycol, de la polycétone, du polyuréthane, du polyamide, de la polyamine, de la polyurée, du polysiloxane, du polytétrafluoroéthylène, de l'éther de polyphénylène, de l'oxyde de polyphénylène, du sulfure de polyphénylène, du polystyrène, du difluorure de polyvinylidène, du chlorure de polyvinyle, de mélange de ceux-ci, dérivés de ceux-ci et copolymères de ceux-ci.

5. Utilisation selon l'une quelconque des revendications 1 à 4, dans laquelle les particules de suie traitées thermiquement par du CO₂ et/ou H₂O sont distribuées de manière homogène et/ou complètement incorporées dans la matrice.

6. Utilisation selon l'une quelconque des revendications 1 à 5, dans laquelle les composés polyhalogénés sont des dibenzo-para-dioxines polyhalogénées, dibenzofuranes polyhalogénés et/ou biphényles polyhalogénés.

7. Utilisation selon l'une quelconque des revendications 1 à 6, dans laquelle la matrice comprenant les particules de suie traitées thermiquement par du CO₂ et/ou H₂O a la forme d'une charge, d'un corps moulé de désembueur et/ou d'un emballage de fibre tricotée.

8. Utilisation selon l'une quelconque des revendications 1 à 7 dans un système de purification de gaz perdu.

9. Utilisation selon la revendication 8, dans laquelle le système de purification de gaz perdu est (i) un système de laveur ou (ii) un système dans lequel un gaz peut s'écouler à travers le gaz devant être purifié, avec ou sans condensation, et avec ou sans addition d'un liquide, sous forme sèche ou humide.
